# EUROPÄISCHE PATENTSCHRIFT

(11) **EP 1 696 208 B1**
(45) Veröffentlichungstag und Bekanntmachung des Hinweises auf die Patenterteilung: **28.05.2008**
(21) Anmeldenummer: 06003247.1
(22) Anmeldetag: 17.02.2006
(51) Int. Cl.: G01C 21/30

(54) **Verfahren zum Erkennen der Position von Fahrzeugen und System zum Erkennen von Fahrzeugen in einem geographischen Bereich**
Method for identifying the position of vehicles and system for identifying vehicles in a geographical area
Procédé de détection de la position de véhicules et système de détection de véhicules dans une zone géographique

(30) Priorität: 23.02.2005 DE 102005008359
(43) Veröffentlichungstag der Anmeldung: 30.08.2006
(73) Patentinhaber: Vodafone Holding GmbH, 40213 Düsseldorf (DE)
(72) Erfinder: Robl, Christian, Dr.-Ing., 94560 Offenberg (DE); Freisler, Thomas, 82131 Gauting (DE)
(74) Vertreter: Müller, Thomas

(56) Entgegenhaltungen:
- EP-A- 1 505 370
- WO-A-20/04025574
- DE-A1- 10 304 465

## Beschreibung

Die vorliegende Erfindung betrifft ein Verfahren zum Erkennen der Position von Fahrzeugen und ein System zum Erkennen von Fahrzeugen in einem geographischen Bereich gemäß den Oberbegriffen der Patentansprüche 1 und 18.

Zur Erhebung von Straßennutzungsgebühren und zu demoskopischen Zwecken ist es bekannt den Aufenthalt von Kraftfahrzeugen in einem geographischen Gebiet zu erfassen. Das Gebiet kann hierbei ein Straßenzug, ein Tunnel, eine Brücke oder aber auch eine Stadt oder ein Land sein.

Neben manuellen Verfahren, bei denen beispielsweise ein Fahrer beim Einfahren in das Gebiet ein Ticket in Papierform zieht und dieses beim Verlassen an einer Zahlstelle vorzeigt oder bei dem in ein Gebiet einfahrende Fahrzeuge von einer Person, die einen Zähler bedient, erfasst werden, sind auch automatisierte Verfahren bekannt. Hierbei werden insbesondere DSRC-basierte (dedicated short range communication) Systeme verwendet. Hierbei sind an vorgegebenen Stellen, Erfassungsvorrichtungen, insbesondere an so genannten Brücken, vorgesehen, die ein in einem Fahrzeug vorgesehenes Identifikationsmittel erkennen und die so erkannte Position des Fahrzeuges an eine Rechnerzentrale übermitteln können. Sind die Brücken beispielsweise an der Auffahrt auf eine gebührenpflichtige Strecke und an der Abfahrt dieser Strecke vorgesehen, so kann hierdurch die Streckenlänge bestimmt werden. Auch über den Streckenverlauf einer gebührenpflichtigen Strecke können solche Brücken vorgesehen sein.

Diese Art des Erkennens des Aufenthalts von Fahrzeugen ist bezüglich der Installations- und Instandhaltungskosten sehr aufwendig.

Aus diesem Grund werden auch Systeme vorgeschlagen, die auf der reinen satellitenbasierten Positionsbestimmung basieren. Hierbei werden Positionsdaten von einem Empfänger im Kraftfahrzeug (GPS-Empfänger) erhalten und mit Kartendaten verglichen. Auf diese Weise kann die Position eines Kraftfahrzeuges auf einem in der Karte angegebenen Streckenabschnitt erkannt werden. Durch Festlegung von bestimmten Bereichen kann auf diese Weise das Einfahren eines Fahrzeuges in einen gebührenpflichtigen Bereich erkannt werden.

Ein solches Verfahren zum Erfassen eines Fahrzeuges in einem Bereich ist beispielsweise in der DE 101 55 501 A1 beschrieben, bei dem insbesondere große Bereiche, wie Städte, erfasst werden sollen.

In der WO 95/14909 wird weiterhin eine Einrichtung in einem Fahrzeug zur Feststellung des Befahrens einer Teilstrecke eines vorgegebenen Straßennetzes beschrieben. Auch in dieser Einrichtung wird die aktuelle Position eines Fahrzeuges in einem vorbestimmten Bereich überwacht. Hierzu werden so genannte Identifikationspunkte abgespeichert, die die Koordinaten der Verzweigung eines vorgegebenen Straßennetzes darstellen. Es werden jeweils zwei Identifikationspunkte zu einer Sektion der Teilstrecke abgespeichert und zwischen den Identifikationspunkten Bestimmungspunkte festgelegt. Das Befahren einer Teilstrecke wird hierbei durch den Vergleich der Positionsdaten eines Kraftfahrzeuges mit den Identifikationspunkten beziehungsweise den Bestimmungspunkten erkannt. Weiterhin werden Messungenauigkeiten durch Vorsehen von Abstandsgrenzwerten berücksichtigt.

Der Nachteil dieser Einrichtung besteht im Wesentlichen darin, dass die Einrichtung für die Überwachung der Fahrzeugposition auf längeren Teilstrecken ausgelegt ist und ein entsprechend hoher Speicherbedarf und Berechnungsbedarf für die Identifikationspunkte und Bestimmungspunkte notwendig ist.

In der WO 2004/025574 A1 ist ein Verfahren zum Feststellen ob zumindest ein mautpflichtiger Straßenabschnitt durch zumindest ein Fahrzeug befahren wird mittels eines Positionsbestimmungssystems beschrieben, welches dazu eingerichtet ist die aktuelle Position des zumindest einen Fahrzeuges zu erfassen, wobei Positionen des zumindest einen Fahrzeuges mit der Position von zumindest einem für eine Auffahrt auf einen mautpflichtigen Straßenabschnitt charakteristischen Referenzpunkt verglichen werden. Innerhalb eines vorgebbaren Bereichs um die Auffahrt wird die Orientierung des Fahrzeuges ermittelt, wobei festgestellt wird, ob die erhaltene Orientierung in einem vorgebbaren Toleranzbereich mit einer für das Auffahren auf den mautpflichtigen Straßenabschnitt charakteristischen Orientierung übereinstimmt. Die von dem Positionsermittlungssystem ermittelten Positionsdaten werden mit Georeferenzdaten einer elektronischen Landkarte verglichen, um die Position des Fahrzeuges in Bezug auf die zumindest eine Auffahrt und die Orientierung des Fahrzeuges in dem Bereich zu ermitteln.

Ein Nachteil dieses Verfahrens besteht darin, dass der Bereich, der überwacht wird, um einen Referenzpunkt gelegt wird. Hierdurch ist zum einen der Rechenaufwand zur Bestimmung des Bereiches und damit der Überwachung erhöht. Zum anderen ist es bei dem beschriebenen Verfahren nachteilig, dass dieses die Position des Fahrzeuges mit dem Referenzpunkt der Auffahrt, das heißt einem Punkt auf einer Landkarte vergleicht. Hierdurch wird der Rechenaufwand weiter gesteigert.

Weiterhin ist in der DE 103 04 465 A1 ein Fahrzeugmanagementsystem beschrieben, bei dem die GPS-Koordinaten einer Vielzahl von Kontrollpunkten von Zufahrten und Ausfahrten einer Autobahn im Speicher eines Fahrzeuges gespeichert sind. Beim Befahren der Autobahn werden eine Codenummer einer Zufahrt und das Autokennzeichen des Fahrzeuges drahtlos an eine Fernsteuerzentrale übermittelt. Ein Nachteil dieses Verfahrens liegt darin, dass lediglich das Durchfahren von Kontrollpunkten zum Erkennen des Fahrzeuges verwendet wird und daher die Zuverlässigkeit des Verfahrens gering ist.

Die Aufgabe der vorliegenden Erfindung ist es somit ein Verfahren zu schaffen, mit dem auf einfache Weise und mit möglichst einfacher Bearbeitung und Berechnung von Daten Fahrzeuge zuverlässig beim Einfahren in und Ausfahren aus auch einem kleineren Bereich erfasst werden können.

Der Erfindung liegt die Erkenntnis zugrunde, dass diese Aufgabe gelöst werden kann, indem neben reinen Positionsdaten eines Kraftfahrzeuges daraus abgeleitete Informationen berücksichtigt werden.

Gemäß einem ersten Aspekt wird die Aufgabe gelöst durch ein Verfahren zum Erkennen der Position von Fahrzeugen, wobei die Positionskoordinaten mit gespeicherten Daten verglichen werden, wobei die gespeicherten Daten mindestens die Definition mindestens einer Fläche umfassen, der Fläche ein Attribut in Form einer Orientierung zugeordnet ist und mindestens eine aus den Positionskoordinaten des Fahrzeuges abgeleitete Größe mit der Orientierung der Fläche verglichen wird. Das Verfahren zeichnet sich dadurch aus, dass die Position des Fahrzeuges durch Ermittlung von Koordinaten in einem Koordinatensystem bestimmt wird, die Fläche durch einen Polygonzug definiert ist und die Fläche in einem Koordinatensystem für Positionen liegt, wobei die Koordinaten der Fläche zumindest teilweise mit den Koordinaten eines geographischen Bereiches übereinstimmen.

Die Positionskoordinaten des Fahrzeuges, die für das erfindungsgemäße Verfahren verwendet werden, werden im Folgenden auch als Fixes bezeichnet.

Das richtungsabhängige Attribut der Fläche wird durch einen Winkel in dem Koordinatensystem definiert. Jeder Fläche wird hierbei eine eigene Orientierung zugeordnet. Durch die Berücksichtigung einer abgeleiteten Größe können auch Umstände in Betracht gezogen werden, die sich nicht aus der reinen Ortsbestimmung ergeben. Die Ableitung der Größe kann eine Berechnung, beispielsweise eine Differenzbildung sein. Es ist aber auch möglich die Größe durch Filterung von Positionsdaten zu ermitteln. Bei einigen Ortungssystemen, wie beispielsweise GPS, werden zusätzlich zu den reinen Positionskoordinaten, die Auskunft über den Ort geben, teilweise auch Informationen übertragen, die sich auf die Geschwindigkeit oder die Bewegungsrichtung des Empfängers beziehen. Bei solchen Systemen, können solche zusätzlichen Informationen zumindest teilweise als abgeleitete Größen dienen.

Die abgeleitete Größe, die mit der Orientierung der Fläche verglichen wird, kann aus Positionskoordinaten des Fahrzeuges während des Vorliegens von Positionskoordinaten in der Fläche abgeleitet werden, und insbesondere die Bewegungsrichtung des Fahrzeuges darstellen. Indem Fixes verwendet werden, die in der Fläche liegen, wird der Zustand des Fahrzeuges, beispielsweise dessen Bewegungsrichtung in dem geographischen Bereich, der von der Fläche abgedeckt ist, für den Vergleich und die weitere Auswertung verwendet. Auf diese Weise kann zudem der Speicherbedarf für das erfindungsgemäße Verfahren verringert werden, da lediglich Fixes zu berücksichtigen sind, die als in der Fläche liegend erkannt wurden. Erfindungsgemäß ist es aber auch möglich Fixes zu berücksichtigen, die in einem Bereich um die Fläche liegen. Hierdurch kann beispielsweise die Bewegungsrichtung des Fahrzeuges an dessen ersten Fix innerhalb der Fläche zuverlässiger bestimmt beziehungsweise überprüft werden.

Vorzugsweise wird somit nach dem Ermitteln von Positionskoordinaten, das heißt eines Fixes, zunächst geprüft, ob diese zu der definierten Fläche gehören, das heißt in dieser Fläche liegen. Die Information über die Zugehörigkeit der Positionskoordinaten zu der Fläche kann über die reine Angabe über den Ort des Fahrzeuges auch als Kriterium für weitere Überprüfungsschritte dienen, denen die Fixes unterzogen werden können, um ein Erkennen des Fahrzeuges in einem geographischen Bereiches zuverlässiger zu machen. Beispielsweise kann diese Information als Kriterium dafür verwendet werden, ob der erfasste Fix für die Ableitung der Größe zum Vergleich mit der Orientierung der Fläche geeignet ist. Wie oben bereits erwähnt, werden für die Ableitung der Größe, beispielsweise der Bewegungsrichtung, vorwiegend Fixes verwendet, die in der Fläche liegen.

Gemäß einer Ausführungsform der vorliegenden Erfindung können mindestens zwei Flächen mit unterschiedlichen Orientierungen so überlagert werden, dass diese sich zumindest teilweise schneiden. Indem die Flächen sich zumindest teilweise schneiden, das heißt sich zumindest teilweise überdecken, stehen in dem Überdeckungsbereich zwei Attribute der Fläche zur Überprüfung des Fixes zur Verfügung. Werden die Flächen beispielsweise so überlagert, dass deren Orientierungen gegensätzlich zueinander verlaufen, so wird ein Mittel geschaffen, mit dem Fahrzeuge, die sich in unterschiedlichen Richtungen bewegen, als in dem geographischen Bereich, der von den Flächen, insbesondere von dem Überdeckungsbereich, abgedeckt wird, befindlich erkannt werden können. Sind die Flächen beispielsweise über einem Teil einer zweispurigen Straße mit Gegenverkehr vorgesehen und jede Fahrtrichtung entspricht einer der Orientierungen, so können mit diesen Flächen Fahrzeuge, unabhängig davon auf welcher der Fahrbahnen sich diese bewegen, erkannt werden. Ein Überqueren einer solchen Straße würde hingegen aufgrund der den Flächen zugeordneten Orientierungen nicht als Befahren der Straße erkannt. Auch für ein Ende einer gebührenpflichtigen Strecke eignet sich eine solche überlagerte Fläche, da damit das Einfahren in und das Ausfahren aus der Strecke überwacht werden kann.

Weiterhin ist es möglich mehr als zwei Flächen miteinander zu überlagern. Auf diese Weise kann eine noch feinere Richtungserkennung ermöglicht werden. Diese kann beispielsweise an Kreuzungen von Nutzen sein.

Die gespeicherten Daten umfassen vorzugsweise neben den Koordinaten, die die Fläche definieren und der Orientierung der Fläche ein der mindestens einen Fläche zugeordnetes weiteres Attribut, das von der Größe der Fläche abhängt. Auf diese Weise kann die Erkennung des Befahrens eines geographischen Bereiches unabhängig von der Größe der Fläche zuverlässig erfolgen. Insbesondere können auch kleinere Flächen zum Erkennen verwendet werden. Hierdurch kann das Verfahren vielseitig und dennoch zuverlässig eingesetzt werden. So kann als geographischer Bereich eine Zufahrt zu einer gebührenpflichtigen Strecke oder einem gebührenpflichtigen Bereich verwendet werden. Die erfindungsgemäße Fläche kann somit als Ersatz für die bekannten DSRC-Brücken verwendet werden. Es ist daher nicht notwendig die Brücken an der Straße aufzustellen. Vielmehr kann die erfindungsgemäße Fläche als so genannte virtuelle Brücke oder Virtual Gantry (VG) dienen.

Zusätzlich zu dem Vergleich mit den gespeicherten Koordinaten der Fläche kann gemäß einer Ausführungsform der Erfindung zusätzlich das Erreichen eines Schwellwertes bezüglich mindestens eines der Attribute der Fläche überprüft werden. Bezüglich des richtungsabhängigen Attributs kann der Schwellwert ein Maximalwert sein und insbesondere eine maximale Winkelabweichung darstellen. Bezüglich des größenabhängigen Attributs kann der Schwellwert hingegen vorzugsweise ein Minimalwert sein. Als maximale Winkelabweichung kann beispielsweise von 30° bis 60°, vorzugsweise 45° festgelegt werden. Auf diese Weise kann vermieden werden, dass ein Kreuzen der Fläche versehentlich als Befahren des der Fläche zugeordneten geographischen Bereiches angesehen wird.

Der Schwellwert kann für jede Fläche und zusätzlich für jede Art des Attributes gesondert festgelegt sein. Auf diese Weise kann unterschiedlichen Umständen gleichzeitig Rechnung getragen werden. So kann durch den Schwellwert des größenabhängigen Attributs die Größe des zu betrachtenden Bereichs berücksichtigt werden, wohingegen durch den Schwellwert des richtungsabhängigen Attributs alternativ oder zusätzlich beispielsweise Umgebungsbedingungen, wie Straßenbreite oder Art der Straße, beispielsweise Autobahn im Vergleich zu Landstraße, berücksichtigt werden kann. Dadurch können mit den Verfahren genauere und zuverlässigere Ergebnisse erzielt werden.

Das größenabhängige Attribut stellt vorzugsweise die Anzahl von erkannten Positionskoordinaten des Fahrzeuges in der Fläche dar, das heißt von Fixes, die in der zu betrachtenden Fläche liegen. Wird für dieses Attribut ein Minimalwert vorgegeben, so wird das Befahren eines geographischen Bereiches, der von der Fläche abgedeckt ist, nur dann angenommen, wenn dieser Minimalwert überschritten wird. Auf diese Weise kann beispielsweise ein Tangieren des geographischen Bereiches von einem tatsächlichen Befahren des Bereiches unterschieden werden und somit das Ergebnis des Verfahrens als zuverlässige Eingangsangabe für ein Bewertungsverfahren, wie beispielsweise ein Bemautungsverfahren, verwendet werden. Die Anzahl der erkannten Positionskoordinaten kann durch Aufsummieren gespeicherter erkannter Positionsdaten oder aber durch Verwendung eines Zählers bestimmt werden. Der Zähler kann hierbei bei jedem in der Fläche liegenden erkannten Fix den Zählerstand um eins erhöhen. Der Schwellwert kann bei kleineren Flächen, insbesondere bei Flächen, die als Virtual Gantry verwendet werden, auf drei festgelegen werden. Bei einer größeren Fläche kann beispielsweise ein Schwellwert aus dem Bereich von 4-10 oder mehr festgelegt werden.

Vorzugsweise werden die Positionskoordinaten an einem fahrzeugseitigen Endgerät, insbesondere einem GPS-Empfänger, ermittelt. Hierdurch kann eine zusätzliche Übermittlung an eine weitere Einheit, wie beispielsweise eine Rechnereinheit unterbleiben und somit der Datenverkehr minimiert werden.

Der Polygonzug, der die Fläche definiert, kann vorzugsweise ein Viereck sein. Hierdurch ist es lediglich erforderlich vier Punkte zu speichern. Der Speicherbedarf auf dem mobilen Endgerät wird daher verringert beziehungsweise bei der Weiterleitung von Daten wird der Datenverkehr verringert. Es ist erfindungsgemäß aber auch möglich einen Polygonzug anderer Form zu wählen. So kann ein Fünfeck, Sechseck oder dergleichen verwendet werden.

Vorzugsweise wird für eine Fläche eine innere und eine äußere Zone definiert, wobei die innere Zone vollständig in der äußeren Zone liegt. Diese Aufteilung der Fläche kann dazu dienen den einzelnen Zonen unterschiedliche Bedeutungen und Kriterien zuzuordnen. Der inneren und der äußeren Zone sind hierbei aber vorzugsweise die gleichen Attribute zugeordnet. Durch die Unterscheidung zwischen einer inneren und einer äußeren Zone kann eine Hysterese zwischen der Einfahrt in ein geographisches Bereich und die Ausfahrt aus dem Bereich erzeugt werden. Die innere Zone wird hierbei für die Beurteilung des Eintritts der Positionskoordinaten in die Fläche und die äußere Zone für das Erkennen des Verlassens der Positionskoordinaten aus der Fläche verwendet. Ist beispielsweise ein Minimalwert für die in der Fläche erkannten Fixes auf drei festgelegt, so wird ein Eintritt in die Fläche erst dann erkannt, wenn drei Fixes in der inneren Zone vorliegen. Hingegen bleibt die Fläche erkannt, das heißt der geographische Bereich wird als von dem Fahrzeug befahren angesehen, solange die Fixes in der äußeren Zone liegen. Auf diese Weise kann das Ergebnis des Verfahrens weiter präzisiert werden.

Die mindestens eine Fläche kann den Koordinaten eines geographischen Gebiets so überlagert sein, dass diese mindestens einen Bereich an dem Rand des geographischen Gebiets abdeckt. Auf diese Weise kann die Fläche zur Überwachung des Einfahrens in und Ausfahren aus dem geographischen Gebiet verwendet werden, ohne, dass das gesamte Gebiet von der Fläche abgedeckt sein muss. Die Menge der zu speichernden Daten wird hierdurch verringert.

Als geographisches Gebiet wird hierbei insbesondere eine Stadt, ein Land oder ein anderes großes Gebiet, wie beispielsweise ein Straßenzug, eine Brücke, ein Tunnel bezeichnet. Der geographische Bereich kann hingegen auf Auffahrten beziehungsweise Zufahrten zu dem Gebiet beschränkt sein. Um die Einfahrt in ein geographisches Gebiet zuverlässig erkennen zu können, sind die den Bereichen zugeordneten Flächen in den gespeicherten Daten hierarchisch über den weiteren geographischen Objekten, die den geographischen Gebieten zugeordnet sind, abgelegt.

Die ermittelten Positionskoordinaten des Fahrzeuges können zunächst mit den Koordinaten verglichen werden, die in einer definierten Fläche enthalten sind, bei Zugehörigkeit der Positionskoordinaten zu den Flächenkoordinaten kann weiterhin die Orientierung der Fläche mit einer gegebenenfalls zuvor aus Positionskoordinaten ermittelten Größe verglichen werden und anschließend mindestens ein der Fläche zugeordnetes Attribut mit einem vorgegebenen Schwellwert verglichen werden. Durch die Überprüfung dieser drei Kriterien wird eine Fläche nur dann als erkannt angenommen wenn sich das Fahrzeug tatsächlich in dem dieser Fläche zugeordneten Bereich befindet und sich auf einem vorgegebenen Kurs, insbesondere Winkel, befindet. Es ist erfindungsgemäß auch möglich diese drei Kriterien in einer anderen Reihenfolge oder zeitgleich zueinander zu überprüfen.

Erfüllen das Ergebnis des Vergleichs der Orientierung mit der ermittelten Größe und/oder das größenabhängige Attribut die Voraussetzungen bezüglich des diesem zugewiesenen Schwellwertes, kann ein weiterer Vergleich der Positionsdaten mit Koordinaten eines flächigen geographischen Objekts, das einem geographischen Gebiet entspricht, in dem Koordinatensystem erfolgen, wobei die Fläche zumindest teilweise dem geographischen Objekt überlagert ist. Hierdurch kann beispielsweise erkannt werden, ob die Fläche zur Erkennung des Eintritts eines Fahrzeuges in ein geographisches Gebiet, das in dem Koordinatensystem beispielsweise als Cordon oder eine andere GeoDomaine definiert ist, dient.

Die Fläche umfasst daher vorzugsweise die Koordinaten einer Einfahrt in oder Ausfahrt aus einem geographischen Gebiet.

Die Positionsbestimmung, das heißt die Ermittlung der Positionskoordinaten, erfolgt erfindungsgemäß vorzugsweise über ein satellitengestütztes System, insbesondere ein so genanntes "Global Positioning System" (GPS). Dieses System weist den Vorteil auf, dass an dem Fahrzeug nur eine einfache, in der Regel bereits vorhandene Empfangsvorrichtung, nämlich ein GPS-Empfänger, notwendig ist.

Gemäß einem weiteren Aspekt der Erfindung betrifft dies ein System zum Erkennen von Fahrzeugen in einem geographischen Bereich, wobei das System ein satellitengestütztes Ortungssystem mit einem fahrzeugseitigen Endgerät umfasst. Das System zeichnet sich dadurch aus, dass das System eine Rechnereinheit umfasst, die zumindest eine Speichereinheit zum Speichern von Koordinaten, eine Empfangseinheit zum Empfang von Positionskoordinaten eines Fahrzeuges, eine Bearbeitungseinheit zur Berechnung von Größen aus empfangenen Koordinaten, und eine Vergleichseinheit zum Vergleich von Koordinaten sowie zum Vergleich berechneter und gespeicherter Daten umfasst, wobei das System zur Durchführung des erfindungsgemäßen Verfahrens ausgelegt ist. Die Rechnereinheit ist vorzugsweise in dem fahrzeugseitigen Endgerät enthalten.

Gemäß einer Ausführungsform umfasst die Rechnereinheit eine Speichereinheit für Positionskoordinaten des Fahrzeuges, eine Speichereinheit für Koordinaten betreffend geographische Bereiche insbesondere für Koordinaten zur Definition einer Fläche, die zumindest teilweise mit den Koordinaten des geographischen Bereichs übereinstimmt, und mindestens eine Speichereinheit zum Speichern von Daten, insbesondere von Attributen einer Fläche. Eines der Attribute stellt vorzugsweise die Orientierung der Fläche in Form eines Winkels dar.

Das System kann eine Rechenzentrale umfassen, in der Nutzungsgebühren für den geographischen Bereich beziehungsweise eines diesen enthaltendes geographisches Gebiet ermittelt oder Zählungen für den geographischen Bereich beziehungsweise das geographische Gebiet durchgeführt werden.

Bei dem erfindungsgemäßen System steht vorzugsweise das fahrzeugseitige Endgerät mit der Rechenzentrale in Kommunikationsverbindung. Über die Kommunikationsverbindung können Ergebnisse der Vergleichseinheit und Identifikationsdaten des Fahrzeuges übermittelt werden.

Vorteile und Merkmale, die bezüglich des erfindungsgemäßen Verfahrens beschrieben werden, gelten entsprechend und soweit anwendbar für das erfindungsgemäße System und umgekehrt.

Die vorliegende Erfindung wird im Folgenden anhand der beiliegenden Zeichnungen genauer beschrieben. Es zeigen:
Figur 1: ein Flussdiagramm des Verlaufs einer Ausführungsform des erfindungsgemäßen Verfahrens;
Figur 2: eine schematische Darstellung einer richtungsabhängigen Fläche gemäß der vorliegenden Erfindung;
Figur 3: eine schematische Darstellung überlagerter Flächen gemäß der vorliegenden Erfindung;
Figur 4: eine schematische Darstellung eines geographischen Objekts mit überlagerten Flächen gemäß der Erfindung; und
Figur 5: eine schematische Darstellung des erfindungsgemäßen Systems.

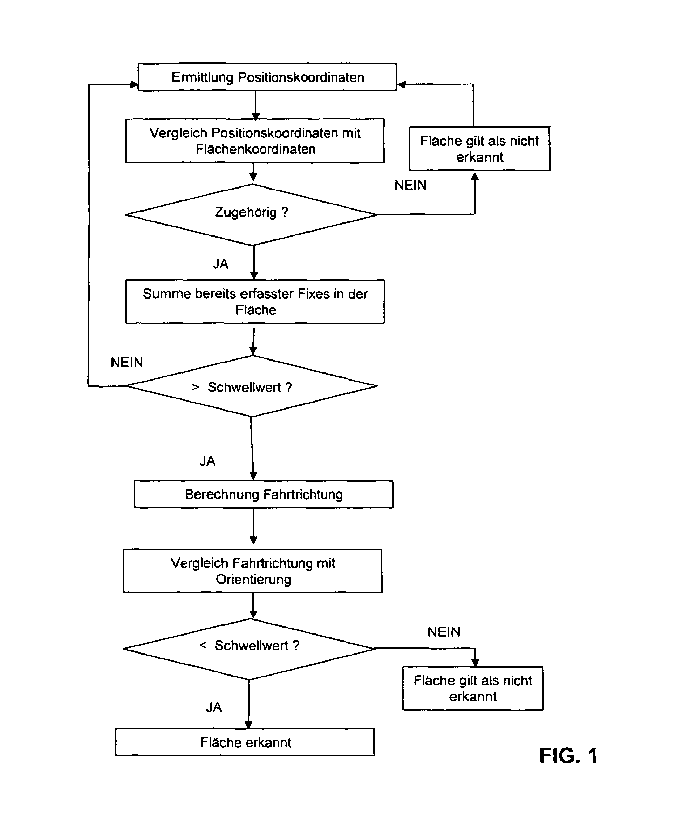

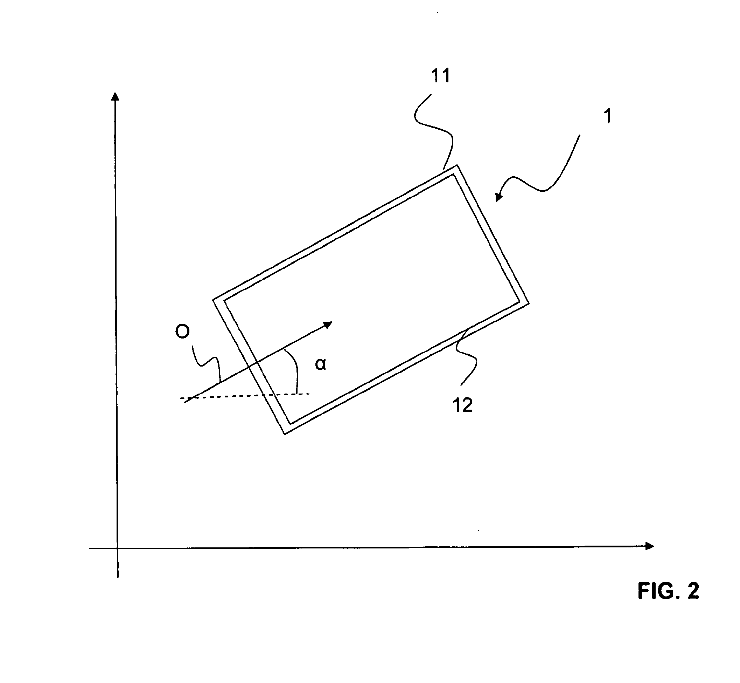

In Figur 1 ist schematisch der Ablauf einer Ausführungsform des erfindungsgemäßen Verfahrens gezeigt und wird im Folgenden erläutert. Die Bezugsziffern beziehen sich auf die Figuren 2 bis 5.

Zunächst werden die Positionskoordinaten eines Fahrzeuges 4 ermittelt. Dies kann durch ein satellitenbasiertes System 5, wie beispielsweise GPS, erfolgen. Die so ermittelten Positionskoordinaten werden in einem Vergleichsschritt mit den Koordinaten, die durch eine vordefinierte Fläche 1 abgedeckt sind, verglichen. Auf diese Weise kann erkannt werden, ob die Positionskoordinaten des Fahrzeuges 4 zu der Fläche 1 gehören, das heißt in dieser liegen. Wird bei diesem Vergleich erkannt, dass die Positionskoordinaten nicht in der Fläche 1 liegen, liefert das Verfahren bezüglich der aktuellen Position des Fahrzeuges 4 die Information, dass der geographische Bereich, der durch die Fläche 1 abgedeckt ist, beispielsweise eine Auffahrt zu einem gebührenpflichtigen Straßenabschnitt 3, derzeit von dem Fahrzeug 4 nicht befahren wird. Die ermittelten Positionskoordinaten können in diesem Fall verworfen beziehungsweise durch die nächsten ermittelten Positionskoordinaten überschrieben werden.

Wird hingegen erkannt, dass die ermittelten Positionskoordinaten in der Fläche 1 liegen, so kann dieser Fix beispielsweise in einem temporären Speicher abgelegt werden. Beim Erfassen des nächsten Fixes nach dem oben beschriebenen Verfahren, wird dieser zu den bereits erfassten Fixes in der Fläche 1 hinzuaddiert. Dies kann beispielsweise durch einen Zähler gewährleistet werden, der bei jedem als in der Fläche 1 liegenden Fix den Zählerstand um eins nach oben setzt. Die Summe beziehungsweise der Zählerstand wird mit einem definierten Schwellwert verglichen, der von der Größe der Fläche 1 abhängt. Bei einer kleinen Fläche 1 kann dieser beispielsweise drei betragen. Ist die Summe beziehungsweise der Zählerstand größer als der Schwellwert, so wird in einem nächsten Schritt die Orientierung O der Fläche 1 berücksichtig.

Diese Berücksichtigung erfolgt, indem die Fahrtrichtung F des Fahrzeuges 4 berechnet wird. Bei Systemen 5, bei denen die Fahrtrichtung zusammen mit der Ermittlung der Positionsdaten durch das satellitengestützte System 5 erfolgt, beschränkt sich die Berechnung auf die reine Bestimmung der Fahrtrichtung F. In der Figur 1 ist angezeigt, dass der Berechnungs- beziehungsweise Bestimmungsschritt der Fahrtrichtung F nach dem Vergleich der Anzahl der Fixes in der Fläche 1 durchgeführt wird. Es ist aber selbstverständlich auch möglich, dass dieser Berechnungs- beziehungsweise Bestimmungsschritt unabhängig von dem Zählerschritt oder zeitgleich mit diesem durchgeführt wird.

Die so erhaltene Fahrtrichtung F wird mit der Orientierung O, die der Fläche 1 zugeordnet ist, verglichen. Hierbei darf die aus den Positionskoordinaten ermittelte Fahrtrichtung F um maximal einen definierten Wert, eine maximale Winkelweichung, von dem der Fläche 1 zugeordneten Winkel α, das heißt deren Orientierung, abweichen. Bei dem Vergleich der Fahrtrichtung F mit der Orientierung O wird somit überprüft, ob die Fahrtrichtung F in dem durch die Orientierung O und die maximale Winkelabweichung abgedeckten Winkelbereich liegt.

Nur, wenn dies der Fall ist, wird in dem Verfahren erkannt, dass das Fahrzeug 4 derzeit den geographischen Bereich, der durch die Fläche 1 abgedeckt ist, befährt.

Es ist erfindungsgemäß selbstverständlich auch möglich, dass nach der Überprüfung der Zugehörigkeit zu einer Fläche 1 zunächst die Fahrtrichtung F mit der Orientierung O der Fläche verglichen wird und erst anschließend eine Überprüfung auf das Erreichen des Schwellwertes der Anzahl von Fixes in der Fläche 1 ausgeführt wird.

In Figur 2 ist eine schematische Wiedergabe einer Fläche 1 gemäß der vorliegenden Erfindung gezeigt. Die Fläche wird durch das diese begrenzende Polygon definiert. Hierzu sind den einzelnen Polygonpunkten Koordinaten zugeordnet. In der dargestellten Ausführungsform ist zudem der Fläche 1 eine Orientierung O, das heißt ein Winkel **α** in dem Koordinatensystem, zugeordnet, die als Pfeil in der Figur 2 wiedergegeben ist. Diese Fläche 1 kann erfindungsgemäß ein so genanntes Virtual Gantry darstellen.

Über ein Positionserkennungsverfahren, insbesondere ein satellitengestütztes Erkennungsverfahren werden die Koordinaten eines Empfängers bestimmt. Diese Positionskoordinaten werden auch als Fixes bezeichnet.

In der dargestellten Ausführungsform sind in der Fläche 1 eine innere und eine äußere Zone 11, 12 vorgesehen. Diese Zonen werden ebenfalls durch Polygonzüge definiert.

Um eine Fläche 1 als erkannt einzustufen, das heißt festzustellen, dass sich das Fahrzeug 4 in dem der Fläche 1 entsprechenden geographischen Bereich befindet beziehungsweise bewegt, müssen bei der dargestellten Ausführungsform eine Reihe von Bedingungen erfüllt sein. Insbesondere gilt die Fläche 1 erst dann als erkannt, wenn zum einen eine definierte Anzahl von Fixes innerhalb der inneren Zone 11 der Fläche 1 liegt. Weiterhin wird die Fahrtrichtung F des Fahrzeuges 4 überwacht. Nur wenn eine Abweichung zwischen der Fahrtrichtung F und der Orientierung O der Fläche 1 unterhalb eines vorgegebenen Schwellwertes liegt, kann die Fläche 1 als erkannt angesehen werden. Als vorgegebene Anzahl von Fixes innerhalb der inneren Zone kann beispielsweise drei festgelegt werden. Ist die Fläche 1 hingegen größer, so kann diese Anzahl sich beispielsweise auf 5 oder 10 erhöhen. Der Schwellwert für die Abweichung zwischen der Fahrtrichtung F und der Orientierung O der Fläche kann bei beispielsweise 45° angesetzt werden. Solange die Fläche 1 als erkannt gilt, wird kein weiteres flächiges geographisches Objekt gesucht. Erst nach dem Verlassen der Fläche wird die Zugehörigkeit der weiteren Fixes zu einem weiteren geographischen Objekt 2 überprüft.

Bevorzugt gilt die Fläche 1 solange als erkannt, wie die GPS-Fixes innerhalb der äußeren Zone 11 der Fläche 1 liegen. Hierdurch wird eine Hysterese zwischen der Erkennung bei der Einfahrt und bei der Ausfahrt gebildet.

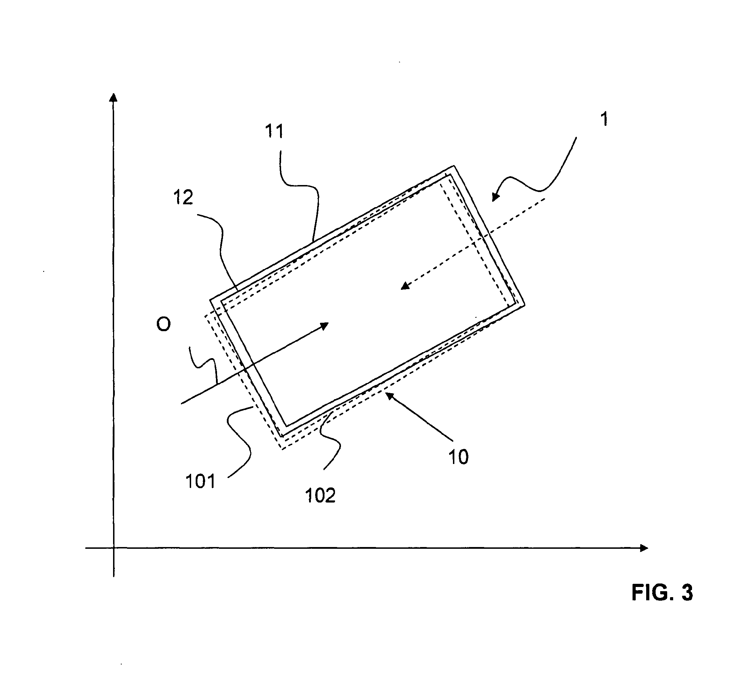

In der Figur 3 ist eine weitere Ausführungsform einer Fläche gezeigt. In dieser Ausführungsform sind zwei Flächen 1, 10 nahezu direkt miteinander überlagert. Die beiden Flächen 1, 10 weisen im Wesentlichen entgegen gesetzte Orientierungen O auf. Durch diese Überlagerung wird ein so genanntes "dual directional Virtual Gantry" erzeugt, das ein Erfassen von zwei sich entgegen gesetzten Fahrtrichtungen erlaubt.

Auch hierbei sind in den beiden Flächen 1, 10 innere und äußere Zonen 11, 12, 101, 102 vorgesehen.

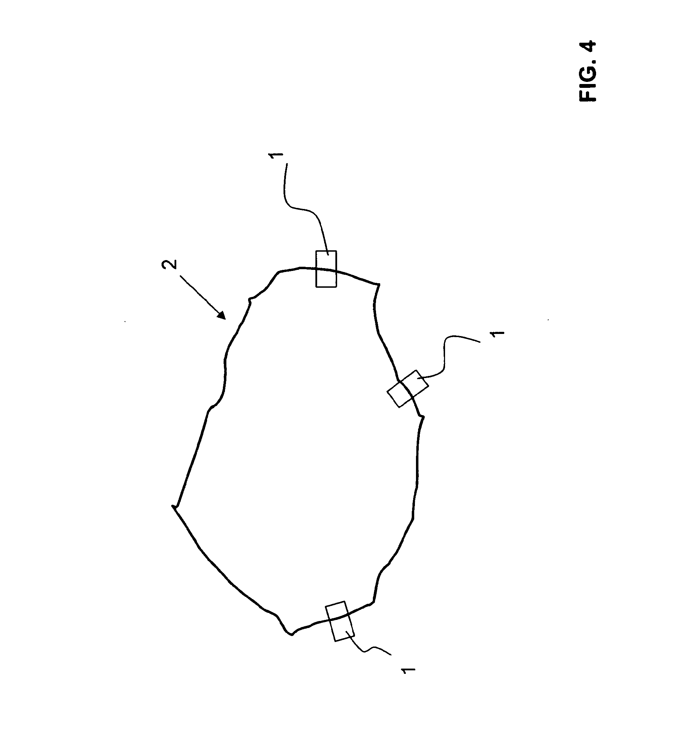

In der Figur 4 ist eine mögliche Ausführungsform der Verteilung von Flächen auf einem geographischen Objekt, das eine Innenraumzone definiert und auch als Cordon 2 bezeichnet wird, gezeigt. Der Cordon 2 wird ebenfalls durch eine innere und eine äußere Zone gebildet. Allerdings ist dem Cordon 2 keine Orientierung zugeordnet. Der Cordon 2 kann beispielsweise das Gebiet einer Stadt abdecken. Entlang des Randes des Cordons 2 sind in Abständen Flächen 1 vorgesehen. Diese sind insbesondere an allen Ein- und Ausfahrtsstrassen vorgesehen. Durch die Reihenfolge der Erkennung der Fläche 1 und des Cordons 2 beziehungsweise des Cordons 2 und der Fläche 1, kann eine Einfahrt in den Cordon 2 beziehungsweise die Ausfahrt aus dem Cordon 2 auf einfache Weise erkannt werden. Um die Einfahrt zuverlässig erkennen zu können liegen die Flächen 1 in den gespeicherten Daten hierarchisch über den weiteren geographischen Objekten, wie dem Cordon 2.

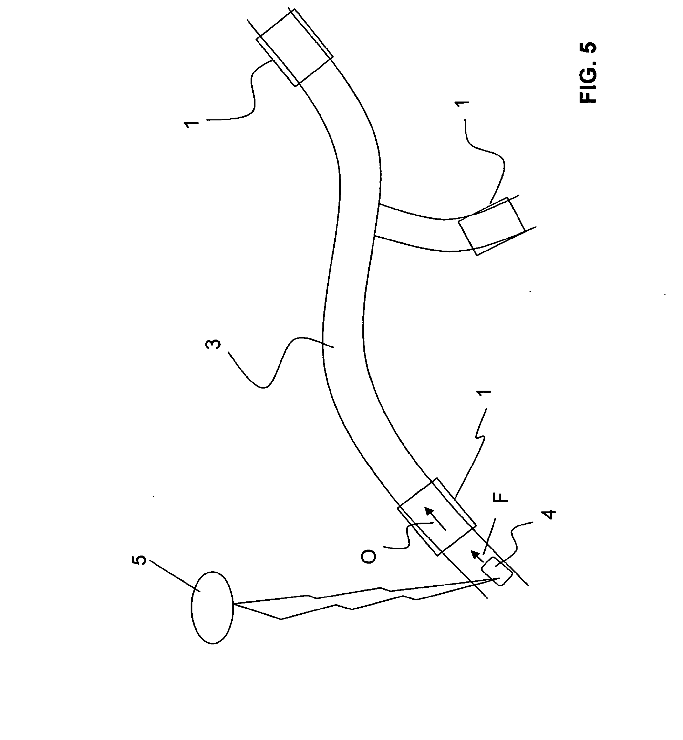

In der Figur 5 ist eine schematische Darstellung des erfindungsgemäßen Systems gezeigt. Ein Fahrzeug 4 ist mit einem Empfänger für Signale eines Satellitensystems 5 ausgestattet. Diese Signale stellen insbesondere GPS-Daten dar. Bewegt sich das Fahrzeug 4 auf einer Strasse 3, so werden diese Signale stets mit neuen Daten überschrieben. In dem Empfänger ist darüber hinaus eine Verarbeitungseinheit vorgesehen, in der Informationen betreffend die Umgebung des Fahrzeuges 4 abgespeichert sind. Bei dem erfindungsgemäßen System ist es hierbei ausreichend, wenn in dem Empfänger Informationen bezüglich vorgegebenen Stellen eines Straßenverlaufs abgespeichert sind. So kann beispielsweise der Eintritt in eine gebührenpflichtige Strecke 3 in Form eines Polygons 1 abgespeichert sein. In der dargestellten Ausführungsform ist zudem dieser Fläche 1, die durch das Polygon definiert wird, eine Orientierung O zugeordnet. Hierdurch kann das Einfahren einer gebührenpflichtigen Strecke 3 erkannt werden.

Mit der vorliegenden Erfindung wird ein Erfassungssystem für DSRC-ähnliche Gantries beziehungsweise Brücken zum Erfassen von Fahrzeugen mit GPS geschaffen. Insbesondere können Fahrzeuge vor Brücken oder Tunnels erkannt werden. Die erfindungsgemäßen Flächen beziehungsweise Virtual Gantries können als Ersatz für DSRC-Tags dienen. Insbesondere kann das erfindungsgemäße Verfahren zum Zählen von Fahrzeugen, die ein flächiges Gebiet, wie beispielsweise eine Innenstadt, oder einen Korridor, z.B. einen Autobahnabschnitt befahren, verwendet werden.

### Bezugszeichenliste

- 1: Fläche (Virtual Gantry)
- 11: innere Zone
- 12: äußere Zone

- 10: überlagerte Fläche
- 101: innere Zone
- 102: äußere Zone

- 2: geographisches Objekt (Cordon)
- 3: Straße
- 4: Fahrzeug
- 5: Satellitenortungssystem

- F: Fahrtrichtung
- O: Orientierung
- α: Winkel der Orientierung

## Patentansprüche

1. Verfahren zum Erkennen der Position von Fahrzeugen, wobei die Positionskoordinaten mit gespeicherten Daten verglichen werden, wobei die gespeicherten Daten mindestens die Definition mindestens einer Fläche (1) umfassen, der Fläche ein Attribut in Form einer Orientierung (O) zugeordnet ist und mindestens eine aus den Positionskoordinaten des Fahrzeuges (4) abgeleitete Größe mit der Orientierung (O) der Fläche (1) verglichen wird, **dadurch gekennzeichnet, dass** die Position des Fahrzeuges (4) durch Ermittlung von Koordinaten in einem Koordinatensystem bestimmt wird, die Fläche (1) durch einen Polygonzug definiert ist und die Fläche (1) in einem Koordinatensystem für Positionen liegt, wobei die Koordinaten der Fläche (1) zumindest teilweise mit den Koordinaten eines geographischen Bereiches übereinstimmen.

2. Verfahren nach Anspruch 1, **dadurch gekennzeichnet, dass** die abgeleitete Größe, die mit der Orientierung (O) der Fläche (1) verglichen wird, aus Positionskoordinaten des Fahrzeuges (4) während des Vorliegens von Positionskoordinaten in der Fläche (1) abgeleitet wird, und insbesondere die Bewegungsrichtung (F) des Fahrzeuges (4) darstellt.

3. Verfahren nach einem der Ansprüche 1 oder 2, **dadurch gekennzeichnet, dass** die Zugehörigkeit der Positionskoordinaten des Fahrzeuges (4) zu der definierten Fläche (1) überprüft wird.

4. Verfahren nach einem der Ansprüche 1 bis 3, **dadurch gekennzeichnet, dass** mindestens zwei Flächen (1, 10) mit unterschiedlichen Orientierungen (O) so überlagert werden, dass diese sich zumindest teilweise schneiden.

5. Verfahren nach einem der Ansprüche 1 bis 4, **dadurch gekennzeichnet, dass** die gespeicherten Daten ein der mindestens einen Fläche (1) zugeordnetes weiteres Attribut umfassen, das von der Größe der Fläche (1) abhängt.

6. Verfahren nach einem der Ansprüche 1 bis 5, **dadurch gekennzeichnet, dass** zusätzlich zu dem Vergleich mit den gespeicherten Koordinaten der Fläche (1) das Erreichen eines Schwellwertes bezüglich mindestens eines der Attribute der Fläche (1) des Attributs überprüft wird.

7. Verfahren nach Anspruch 5 oder 6, **dadurch gekennzeichnet, dass** das Attribut die Anzahl von erkannten Positionskoordinaten des Fahrzeuges (4) in der Fläche (1) darstellt.

8. Verfahren nach einem der Ansprüche 1 bis 7, **dadurch gekennzeichnet, dass** die Positionskoordinaten an einem fahrzeugseitigen Endgerät, insbesondere einem GPS-Empfänger, ermittelt werden.

9. Verfahren nach einem der Ansprüche 1 bis 8, **dadurch gekennzeichnet, dass** der Polygonzug, der die Fläche (1) definiert ein Viereck ist.

10. Verfahren nach einem der Ansprüche 1 bis 9, **dadurch gekennzeichnet, dass** für eine Fläche (1) eine innere und eine äußere Zone (11, 12) definiert wird, wobei die innere Zone (11) vollständig in der äußeren Zone (12) liegt.

11. Verfahren nach Anspruch 10, **dadurch gekennzeichnet, dass** die innere Zone (11) für die Beurteilung des Eintritts der Positionskoordinaten in die Fläche (1) und die äußere Zone (12) für das Erkennen des Verlassens der Positionskoordinaten aus der Fläche (1) verwendet wird.

12. Verfahren nach einem der Ansprüche 1 bis 11, **dadurch gekennzeichnet, dass** die mindestens eine Fläche (1) den Koordinaten eines geographischen Gebiets so überlagert wird, dass die mindestens eine Fläche (1) an dem Rand des geographischen Gebiets liegt.

13. Verfahren nach einem der Ansprüche 1 bis 12, **dadurch gekennzeichnet, dass** die ermittelten Positionskoordinaten des Fahrzeuges (4) zunächst mit den Koordinaten verglichen werden, die in einer definierten Fläche (1) enthalten sind, bei Zugehörigkeit der Positionskoordinaten zu den Flächenkoordinaten weiterhin die Orientierung (O) der Fläche (1) mit einer gegebenenfalls zuvor aus Positionskoordinaten ermittelten Größe verglichen wird und anschließend ein der Fläche (1) zugeordnetes Attribut mit einem vorgegebenen Schwellwert verglichen wird.

14. Verfahren nach Anspruch 13, **dadurch gekennzeichnet, dass**, wenn das Ergebnis des Vergleichs der Orientierung mit der ermittelten Größe und/oder das größenabhängige Attribut die Voraussetzungen bezüglich des diesen zugewiesenen Schwellwertes erfüllen, ein weiterer Vergleich der Positionsdaten mit Koordinaten eines flächigen geographischen Objekts (2), das einem geographischen Gebiet entspricht, in dem Koordinatensystem erfolgt, wobei die Fläche (1) zumindest teilweise dem geographischen Objekt (2) überlagert ist.

15. Verfahren nach einem der Ansprüche 1 bis 14, **dadurch gekennzeichnet, dass** die Fläche (1) die Koordinaten einer Einfahrt in oder Ausfahrt aus einem geographischen Gebiet umfasst.

16. Verfahren nach einem der Ansprüche 1 bis 15, **dadurch gekennzeichnet, dass** das geographische Gebiet einen Straßenzug, eine Brücke, einen Tunnel, eine Stadt oder ein Land darstellt.

17. Verfahren nach einem der Ansprüche 1 bis 16, **dadurch gekennzeichnet, dass** die Positionsbestimmung über ein satellitengestütztes System, insbesondere GPS, erfolgt.

18. System zum Erkennen von Fahrzeugen (4) in einem geographischen Bereich, wobei das System ein satellitengestütztes Ortungssystem (5) mit einem fahrzeugseitigen Endgerät umfasst, **dadurch gekennzeichnet, dass** das System eine Rechnereinheit umfasst, die zumindest eine Speichereinheit zum Speichern von Koordinaten, eine Empfangseinheit zum Empfang von Positionskoordinaten eines Fahrzeuges (4), eine Bearbeitungseinheit zur Berechnung von Größen aus empfangenen Koordinaten, und eine Vergleichseinheit zum Vergleich von Koordinaten sowie zu Vergleich berechneter und gespeicherter Daten umfasst und das System Mittel zur Durchführung des Verfahrens nach einem der Ansprüche 1 bis 17 umfasst.

19. System nach Anspruch 18, **dadurch gekennzeichnet, dass** die Rechnereinheit in dem fahrzeugseitigen Endgerät enthalten ist.

20. System nach einem der Ansprüche 18 oder 19, **dadurch gekennzeichnet, dass** die Rechnereinheit eine Speichereinheit für Positionskoordinaten des Fahrzeuges, eine Speichereinheit für Koordinaten betreffend geographische Bereiche insbesondere für Koordinaten zur Definition einer Fläche, die zumindest teilweise mit den Koordinaten des geographischen Bereichs übereinstimmt, und mindestens eine Speichereinheit zum Speichern von Daten, insbesondere von Attributen einer Fläche (1) und der Orientierung (0) einer Fläche (1) umfasst.

21. System nach einem der Ansprüche 18 bis 20, **dadurch gekennzeichnet, dass** dieses eine Rechenzentrale umfasst, in der Nutzungsgebühren für den geographischen Bereich ermittelt oder Zählungen für den geographischen Bereich durchgeführt werden.

22. System nach einem der Ansprüche 18 bis 21, **dadurch gekennzeichnet, dass** das fahrzeugseitige Endgerät in Kommunikationsverbindung mit der Rechenzentrale steht.

23. System nach Anspruch 22, **dadurch gekennzeichnet, dass** über die Kommunikationsverbindung Ergebnisse der Vergleichseinheit und Identifikationsdaten des Fahrzeuges übermittelt werden.

## Claims

1. Method of detecting the position of vehicles in which the position coordinates are compared with stored data, the stored data comprising at least the definition of at least one area (1), an attribute in the form of an orientation (O) is assigned to the area, and at least one variable derived from the position coordinates of the vehicle (4) is compared with the orientation (O) of the area (1), **characterised in that** the position of the vehicle (4) is detected by determining coordinates in a coordinate system, the area (1) is defined by a traverse and the area (1) is situated in a coordinate system for positions, the coordinates of the area (1) agreeing at least partially with the coordinates of a geographical region.

2. Method according to claim 1, **characterised in that** the derived variable that is compared with the orientation (O) of the area (1) is derived from position coordinates of the vehicle (4) during the presence of position coordinates in the area (1), and represents in particular the direction of travel (F) of the vehicle (4).

3. Method according to one of claims 1 or 2, **characterised in that** a check is carried out as to whether the position coordinates of the vehicle (4) belong to the defined area (1).

4. Method according to one of claims 1 to 3, **characterised in that** at least two areas (1, 10) with different orientations (O) are superimposed such that they at least partly intersect.

5. Method according to one of claims 1 to 4, **characterised in that** the stored data comprise a further attribute assigned to the at least one area (1) and dependent on the size of the area (1).

6. Method according to one of claims 1 to 5, **characterised in that** in addition to the comparison with the stored coordinates of the area (1) a check is carried out as to whether a threshold value has been reached with regard to at least one of the attributes of the area (1) of the attribute.

7. Method according to claim 5 or 6, **characterised in that** the attribute represents the number of position coordinates of the vehicle (4) recognised in the area (1).

8. Method according to one of claims 1 to 7, **characterised in that** the position coordinates are determined on a vehicle-mounted terminal, particularly a GPS receiver.

9. Method according to one of claims 1 to 8, **characterised in that** the traverse that defines the area (1) is a quadrilateral.

10. Method according to one of claims 1 to 9, **characterised in that** an inner and an outer zone (11, 12) are defined for an area (1), the inner zone (11) being situated entirely within the outer zone (12).

11. Method according to claim 10, **characterised in that** the inner zone (11) is used to evaluate the entry of the position coordinates into the area (1) and the outer zone (12) is used to detect the departure of the position coordinates from the area (1).

12. Method according to one of claims 1 to 11, **characterised in that** the at least one area (1) is superimposed on the coordinates of a geographical region such that the at least one area (1) is located at the edge of the geographical region.

13. Method according to one of claims 1 to 12, **characterised in that** the position coordinates determined for the vehicle (4) are initially compared with the coordinates contained in a defined area (1), if the position coordinates belong to the area coordinates the orientation (O) of the area (1) is further compared with a variable optionally determined beforehand from position coordinates and then an attribute assigned to the area (1) is compared with a given threshold value.

14. Method according to claim 13, **characterised in that** when the results of the comparison of the orientation with the variable determined and/or the variable-dependent attribute meet the prerequisites regarding the threshold value allocated thereto, a further comparison of the positional data with coordinates of an areal geographical object (2) that corresponds to a geographical region takes place in the coordinate system, the area (1) being at least partly superimposed on the geographical object (2).

15. Method according to one of claims 1 to 14, **characterised in that** the area (1) encompasses the coordinates of a journey into or out of a geographical region.

16. Method according to one of claims 1 to 15, **characterised in that** the geographical region is a section of road, a bridge, a tunnel, a town or a country,

17. Method according to one of claims 1 to 16, **characterised in that** the determination of position is carried out using a satellite-assisted system, particularly GPS.

18. System for detecting vehicles (4) in a geographical region, wherein the system comprises a satellite-assisted location system (5) having a vehicle-mounted terminal, **characterised in that** the system includes a computer unit which comprises at least one memory unit for storing coordinates, a receiving unit for receiving position coordinates of a vehicle (4), a processing unit for computing variables from the coordinates received, and a comparator unit for comparing coordinates and for comparing calculated and stored data, and the system comprises means for carrying out the method according to one of claims 1 to 17.

19. System according to claim 18, **characterised in that** the computer unit is contained in the vehicle-mounted terminal.

20. System according to one of claims 18 or 19, **characterised in that** the computer unit comprises a memory unit for position coordinates of the vehicle, a memory unit for coordinates relating to geographical regions, particularly for coordinates for defining an area that coincides at least partly with the coordinates of the geographical region, and at least one memory unit for storing data, particularly attributes of an area (1) and the orientation (O) of an area (1).

21. System according to one of claims 18 to 20, **characterised in that** it comprises a central computer in which usage charges for the geographical region are determined or counts for the geographical region are made.

22. System according to one of claims 18 to 21, **characterised in that** the vehicle-mounted terminal is in communication connection with the central computer.

23. System according to claim 22, **characterised in that** the results of the comparator unit and identification data for the vehicle are transmitted through the communication connection.

## Revendications

1. Procédé de détection de la position de véhicules, dans lequel les coordonnées de position sont comparées à des données stockées, dans lequel les données stockées comprennent au moins la définition d'au moins une surface (1), un attribut sous la forme d'une orientation (0) est associé à la surface et au moins une grandeur déduite des coordonnées de position du véhicule (4) est comparée à l'orientation (O) de la surface (1), **caractérisé en ce que** la position du véhicule (4) est déterminée en établissant des coordonnées dans un système de coordonnées, la surface (1) est définie par un tracé polygonal et la surface (1) se trouve dans un système de coordonnées pour des positions, les coordonnées de la surface (1) correspondant au moins partiellement aux coordonnées d'un secteur géographique.

2. Procédé selon la revendication 1, **caractérisé en ce que** la grandeur déduite, qui est comparée à l'orientation (O) de la surface (1), est déduite des coordonnées de position du véhicule (4) durant la présence des coordonnées de position dans la surface (1) et représente en particulier la direction de déplacement (F) du véhicule (4).

3. Procédé selon l'une des revendications 1 ou 2, **caractérisé en ce que** l'appartenance des coordonnées de position du véhicule (4) est vérifiée pour la surface définie (1).

4. Procédé selon l'une des revendications 1 à 3, **caractérisé en ce qu'**au moins deux surfaces (1, 10) avec des orientations différentes (0) sont superposées de sorte que celles-ci se recoupent au moins partiellement.

5. Procédé selon l'une des revendications 1 à 4, **caractérisé en ce que** les données stockées comprennent un autre attribut, associé à la au moins une surface (1), qui dépend de la grandeur de la surface (1).

6. Procédé selon l'une des revendications 1 à 5, **caractérisé en ce que**, en plus de la comparaison aux coordonnées stockées de la surface (1), il est vérifié qu'une valeur de seuil est atteinte en ce qui concerne au moins un des attributs de la surface (1) de l'attribut.

7. Procédé selon la revendication 5 ou 6, **caractérisé en ce que** l'attribut représente le nombre de coordonnées de position détectées du véhicule (4) dans la surface (1).

8. Procédé selon l'une des revendications 1 à 7, **caractérisé en ce que** les coordonnées de position sont établies dans un terminal au niveau du véhicule, en particulier dans un récepteur GPS.

9. Procédé selon l'une des revendications 1 à 8, **caractérisé en ce que** le tracé polygonal qui définie la surface (1) est un quadrilatère.

10. Procédé selon l'une des revendications 1 à 9, **caractérisé en ce qu'**une zone intérieure et une zone extérieure (11, 12) sont définies pour une surface (1), la zone intérieure (11) étant entièrement située dans la zone extérieure (12).

11. Procédé selon la revendication 10, **caractérisé en ce que** la zone intérieure (11) est employée pour juger que les coordonnées de position entrent dans la surface (1) et la zone extérieure (12) pour détecter que les coordonnées de position quittent la surface (1).

12. Procédé selon l'une des revendications 1 à 11,
**caractérisé en ce que** la au moins une surface (1) est superposée aux coordonnées d'une région géographique de sorte que la au moins une surface (1) est située sur le bord de la région géographique.

13. Procédé selon l'une des revendications 1 à 12, **caractérisé en ce que** les coordonnées établies de la position du véhicule (4) sont d'abord comparées aux coordonnées qui sont contenues dans une surface définie (1), en cas d'appartenance des coordonnées de position aux coordonnées de la surface, l'orientation (O) de la surface (1) est en outre comparée à une grandeur établie le cas échéant à partir de coordonnées de position et ensuite un attribut associé à la surface (1) est comparé à une valeur de seuil prédéfinie.

14. Procédé selon la revendication 13, **caractérisé en ce que**, si le résultat de la comparaison de l'orientation avec la grandeur établie et/ou l'attribut dépendant de la grandeur satisfont les conditions préalables en ce qui concerne la valeur de seuil affectée à ceux-ci, une autre comparaison des données de position aux coordonnées d'un objet géographique plan (2), qui correspond à une région géographique, a lieu dans le système de coordonnées, la surface (1) étant superposée au moins partiellement à l'objet géographique (2).

15. Procédé selon l'une des revendications 1 à 14, **caractérisé en ce que** la surface (1) comprend les coordonnées d'une entrée ou d'une sortie d'un véhicule dans ou en dehors d'une région géographique.

16. Procédé selon l'une des revendications 1 à 15, **caractérisé en ce que** la région géographique est une rue, un pont, un tunnel, une ville ou un pays.

17. Procédé selon l'une des revendications 1 à 16, **caractérisé en ce que** la détermination de position se fait par le biais d'un système assisté par satellites, en particulier par un système GPS.

18. Système de détection de véhicules n (4) dans un secteur géographique, le système comprenant un système de localisation assisté par satellites (5) avec un terminal au niveau du véhicule, **caractérisé en ce que** le système comprend une unité de calcul qui comprend au moins une unité de stockage pour stocker des coordonnées, une unité de réception pour recevoir des coordonnées de position d'un véhicule (4), une unité de traitement pour calculer des grandeurs à partir des coordonnées reçues et une unité de comparaison pour comparer des coordonnées ainsi que pour comparer des données calculées et stockées, et **en ce que** le système comprend des moyens pour exécuter le procédé selon l'une des revendications 1 à 17.

19. Système selon la revendication 18, **caractérisé en ce que** l'unité de calcul est contenue dans le terminal au niveau du véhicule.

20. Système selon l'une des revendications 18 ou 19, **caractérisé en ce que** l'unité de calcul comprend une unité de stockage pour des coordonnées de position du véhicule, une unité de stockage pour des coordonnées concernant des secteurs géographiques en particulier pour des coordonnées destinées à définir une surface, qui correspond au moins partiellement aux coordonnées du secteur géographique, et au moins une unité de stockage pour stocker des données, en particulier des attributs d'une surface (1) et de l'orientation (O) d'une surface (1).

21. Système selon l'une des revendications 18 à 20,
**caractérisé en ce que** celui-ci comprend un centre de calcul, dans lequel sont établies des taxes d'utilisation pour le secteur géographique ou sont effectués des comptages pour le secteur géographique.

22. Système selon l'une des revendications 18 à 21, **caractérisé en ce que** le terminal au niveau du véhicule est en communication avec le centre de calcul.

23. Système selon la revendication 22, **caractérisé en ce que** les résultats de l'unité de comparaison et les données d'identification du véhicule sont transmis/transmises par la liaison de communication.
